(19) Europäisches Patentamt
European Patent Office
Office européen des brevets

(11) **EP 3 564 735 A1**

(12) **EUROPEAN PATENT APPLICATION**

(43) Date of publication:
**06.11.2019 Bulletin 2019/45**

(51) Int Cl.:
**G02B 27/22** (2018.01)    **G02B 27/01** (2006.01)

(21) Application number: **18305563.1**

(22) Date of filing: **04.05.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **THOMSON LICENSING**
**92130 Issy les Moulineaux (FR)**

(72) Inventors:
• **VANDAME, Benoît**
  **35576 CESSON-SÉVIGNÉ (FR)**
• **DRAZIC, Valter**
  **35576 CESSON-SÉVIGNÉ (FR)**
• **BLONDÉ, Laurent**
  **35576 CESSON-SÉVIGNÉ (FR)**

(74) Representative: **Vidon Brevets & Stratégie**
**16B, rue de Jouanet**
**BP 90333**
**35703 Rennes Cedex 7 (FR)**

(54) **A HEAD-MOUNTED DEVICE COMPRISING A MICRO-LENS ARRAY ON ITS DISPLAY**

(57)    The invention concerns a head-mounted device embedding a single display.

However, such a head mounted device has a reduced field of view which may have a negative impact on the quality of the images presented to the users of such head mounted devices. The proposed solution consists in positioning a micro-lens array on a display of the head-mounted device to spatially multiplex images emitted by the display for each eye of a user of the head-mounted device on the entire surface of the display by interleaving pixels which emits light for a first eye of the user with pixels which emits light for the second eye and ensuring that each eye sees light emitted by pixels intended for this eye. Such a solution enables to double the field of view for each eye of the user of the head-mounted device.

**Fig. 1**

EP 3 564 735 A1

**Description**

TECHNICAL FIELD

The present disclosure relates to head mounted devices and more particularly head mounted devices embedding a single display.

BACKGROUND

Head mounted devices are used in various applications such as augmented reality or virtual reality.

A head mounted device has one or two displays, with lenses and semi-transparent mirrors embedded in eyeglasses, a visor, or a helmet. The display units are miniaturized and may include liquid crystal displays (LCDs), liquid crystal on silicon (LCos), or organic light-emitting diodes (OLED). Some vendors employ multiple displays to increase total resolution and field of view.

Head mounted devices differ in whether they can display computer-generated imagery (CGI), or live imagery from the physical world, or a combination of both, such as a CGI superimposed on real-world views.

A head mounted device may be compact to enhance comfort and may offer resolution, contrast and a field of view wide enough to provide users an interesting quality of experience.

US Patent Application n°2004/0004584 concerns a head mounted device having a single display. Such a head mounted device is thus compact. However, such a head mounted device has a reduced field of view which may have a negative impact on the quality of the images presented to the users of such head mounted devices.

The present solution has been devised with the foregoing in mind.

SUMMARY OF INVENTION

According to a first aspect of the disclosure there is provided a head-mounted device comprising:

- a display,
- a lens assembly,

wherein light emitted by said display propagates through said lens assembly, said head-mounted device further comprising:

- a micro-lens array positioned above said display,

wherein a micro-lens of said micro-lens array covers at least two adjacent pixels of said display, said micro-lens enabling the light emitted by said two adjacent pixels to exit said lens-assembly respectively in a first half and in a second half of an exit pupil of said lens assembly, the light exiting the lens-assembly through the first half of said exit pupil being transmitted to a first eye of a user of said head-mounted device and the light exiting the lens-assembly through the second half of said exit pupil being transmitted to a second eye of said user.

Positioning a micro-lens array on a display of a head-mounted device according to an embodiment of the disclosure enables to spatially multiplex images emitted by the display for each eye of a user of the head-mounted device on the entire surface of the display by interleaving pixels which emits light for a first eye of the user with pixels which emits light for the second eye and ensuring that each eye sees light emitted by pixels intended for this eye. Such a solution enables to double the field of view for each eye of the user of the head-mounted device.

Due to the micro-lenses of the micro-lens array, the optical path of the light emitted by two adjacent pixels of the display under a same micro-lens is modified. The light emitted by the two adjacent pixels enters the lens assembly under different incident angles which leads to the light propagating through the lens assembly along different optical paths and exiting the lens assembly in a specific location and direction, i.e. a given half of the exit pupil of the lens assembly.

The exit pupil of an optical system, such as a lens assembly, is a virtual aperture in said optical system. Rays of light which pass through this virtual aperture are the only rays of light that can exit the optical system. [For example, a for a properly designed optical system, an exit pupil is an image of an aperture of the optical system. For example, in a telescope, this image is an image of the objective element(s) as produced by the eyepiece. The size and shape of the exit pupil is crucial to the instrument's performance, because the observer's eye can only see light that passes through this tiny aperture.

To use an optical instrument properly, the entrance pupil of the viewer's eye must be aligned with and be smaller or of similar size to the instrument's exit pupil as the eye may rotate and the eye pupil may move and possibly stay inside the optical instrument's exit pupil. This properly couples the optical system to the eye and avoids vignetting.

According to an embodiment of the head mounted device, the micro-lenses of the micro-lens array are cylindrical.

Cylindrical micro-lenses direct the light emitted by one of the two adjacent pixels toward one eye of the user only.

According to an embodiment of the head mounted device, a micro-lens covers two adjacent columns of pixels of said display.

In this embodiment, a micro-lens of the micro-lens array has a width of two pixels and its length corresponds to the size of a column of the display.

According to an embodiment of the head mounted device, a micro-lens covers two adjacent rows of pixels of said display.

In this embodiment, a micro-lens of the micro-lens array has a height of two pixels and its length corresponds to the size of a row of the display.

According to an embodiment of the head mounted device, it comprises a reflecting wedge located in a vicinity of said exit pupil, said reflecting wedge transmitting the light exiting the lens-assembly through the first half of said exit pupil to be seen by the first eye of said user after reflection by a first mirror and the light exiting the lens-assembly through the second half of said exit pupil to be seen the second eye of said user after reflection by a second mirror.

According to an embodiment of the head mounted device, it comprises a first and a second mirror, the first mirror reflecting the light exiting the lens-assembly through the first half of said exit pupil, and reflected by the reflecting wedge, to the first eye of said user and the second mirror reflecting the light exiting the lens-assembly through the second half of said exit pupil, and reflected by the reflecting wedge, to the second eye of said user.

According to an embodiment of the head mounted device, the first and the second mirrors are semi-transparent mirrors.

Semi-transparent mirrors enable light to pass through the mirrors so the head mounted device is acting as a see-through device.

BRIEF DESCRIPTION OF THE DRAWINGS

Embodiments of the disclosure will now be described, by way of example only, and with reference to the following drawings in which:

 **Figure 1** represents a head mounted device according to an embodiment of the disclosure;
 **Figures 2A and 2B** represent an embodiment of the micro-lens array positioned above the display of the head mounted device,
 **Figure 3** illustrates how the micro-lens array is positioned versus the display.

DETAILED DESCRIPTION

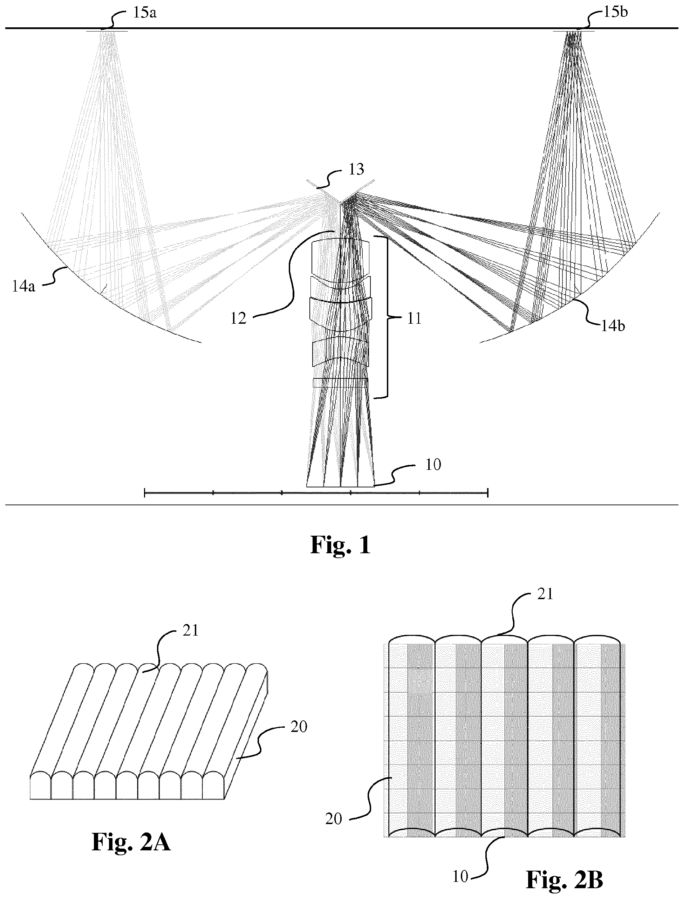

**Figure 1** represents a head mounted device 1 according to an embodiment of the disclosure. The head mounted device 1 comprises a display 10, a lens assembly 11, a reflective wedge 13 and two reflective mirrors 14a and 14b. The light emitted by the display 10 propagates through the lens assembly 11.

There is some space left between the display and a first surface of an objective lens of the lens assembly 11 in order to accommodate an incident illumination if needed for example for LCOS (Liquid Crystal On Silicon) displays or DLP (Digital Light Processing) displays. In an embodiment of the head mounted devise 10, the first surface of the lens assembly 11 is flat and the first lens is an angular filter. This is particularly needed for OLED (Organic Light Emitting Diode) displays. OLED displays have a light emission cone of ±90 degrees which when not controlled, allows light to spread in all directions. A typical component to prevent stray light and just let through the lens assembly 11 the necessary rays could be a pair of crossed louver film types.

For example; the lens assembly 11 has a total field angle of 60 degrees, a high working f-number to gather the maximum amount of light and a focal length of 13.5mm.

The different surfaces of the lenses constituting the lens assembly 11 are even spheres, made, for example, of moldable material, which decrease their manufacturing cost. The lens assembly 11 is compact and requires very little space in the head mounted device 10. In order to reach that compactness, the aperture stop of the lens assembly 11 is, for example, located at 0.8 mm after the last lens of the lens assembly 11.

The reflecting wedge 13 is in the vicinity of an exit pupil 12 of said lens assembly 11. The exit pupil 12 of the lens assembly 11 is a virtual aperture in said lens assembly 11. Rays of light emitted by the display 10 which pass through this virtual aperture are the only rays of light that can exit the lens assembly 11.

To use an optical instrument, such as a head mounted display 10, properly, an entrance pupil of a viewer's eye pupil must be aligned with and be of smaller or similar size to the exit pupil 12 of the head mounted device 10. This properly couples the optical system to the eye pupil and avoids vignetting.

The reflecting wedge 13 separates the light exiting the lens assembly 11 in two light beams, one for each eye pupil 15a and 15b of a user of the head mounted device 10. In addition to splitting the light exiting the lens assembly 11, the reflecting wedge 13 has also an optical function. Indeed, in an embodiment of the disclosure, the surface of the reflecting wedge 13 is designed as non-flat, in conjunction to the lens assembly 11 in order to increase the quality of the images and to correct optical aberrations.

Two mirrors 14a and 14b are placed on a front side of the head mounted device 1, in front of the eye pupils 15a and 15b of a user of the head mounted device 1. Those two mirrors 14a, 14b reflect the light reflected by the reflecting wedge 13 toward a pupil of the eye pupils 15a, 15b of the user. In an embodiment of the disclosure, the mirrors 14a, 14b let light from the environment go through for the head mounted device 1 to act as a see-through device, e.g. for augmented reality purposes.

In an embodiment of the disclosure, the mirrors 14a, 14b may be aspheric and like the reflecting wedge 13, they may be optimized in conjunction to the lens assembly 11 as a whole optical system to provide a crisper image.

A micro-lens array, not shown on figure 1, is positioned above the display 10. The purpose of this micro-lens array is to orient the light emitted by certain pixels of the display 10 to one eye pupil only of the user of the head mounted device 1.

**Figures 2A and 2B** represent an embodiment of the micro-lens array 20 positioned above the display 10 of the head mounted device 1. In this embodiment, the micro-lens array 20 is a cylindrical micro-lens array.

In the embodiment represented on figure 2A, a micro-lens 21 of the micro-lens array 20 covers two adjacent columns of pixels of the display 10. In another embodiment, a micro-lens 21 of the micro-lens array 20 covers two adjacent rows of pixels of the display 10.

On figure 2B, the dark and light columns of the pixels of the display 10 illustrate the half-beams of lights which hit the eye pupils 15a and 15b of the user (the light grey or dark grey half-beams of light as illustrated in figure 1).

Positioning such a micro-lens array 20 on the display 10 avoids the division by two of the field of view of the head mounted device 1, as would occur in a similar optical system without micro-lens array. Such a micro-lens array 20 enables to multiplex the images intended for each eye pupil 15a, 15b of the user of the head mounted device 1 on the entire surface of the display 10 by interleaving pixels for a first eye pupil 15a with pixels for a second eye pupil 15b and ensuring that each eye pupil 15a, 15b only receives light emitted by the dedicated pixels of the display 10. Such a solution doubles the field of view of the head mounted device 1. Such a dual pixel arrangement with a micro-lens 21 per pixel pair of the display 10 enables to split the exit pupil 12 of the lens assembly 11 in two. Thus, for each half of the display 10, an exit pupil is created where 4 chief rays pass through the middle of the image displayed and the center of the exit pupil.

If a user puts one of his eye pupil 15a, 15b at the exit pupil 12, i.e. before the reflecting wedge 13, and looks in the direction of the incoming light, the eye pupils 15a, 15b of the user can see the whole surface of the display 10, which means that the field of view is no more limited to half of the display 10.

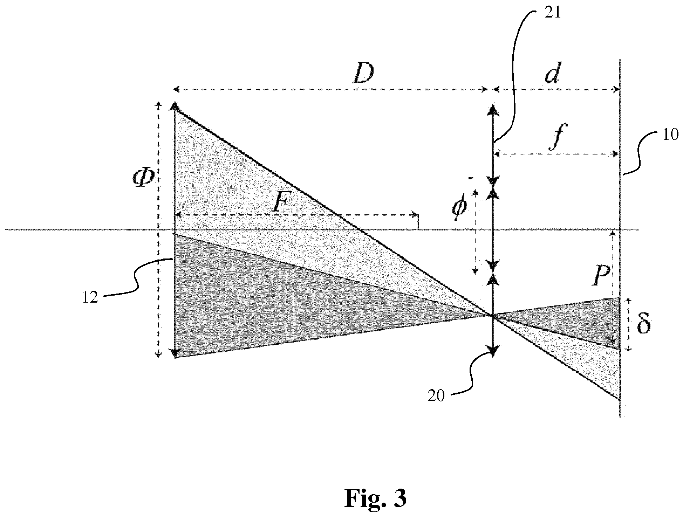

**Figure 3** illustrates how the micro-lens array 20 is positioned versus the display 10.

In figure 3, the lens assembly 11 is schematized by a thin lens. The lens assembly is characterized with the following parameters: $F$ the equivalent focal; $\Phi$ the diameter of exit pupil 12; $D$ the distance of exit pupil 12.

The micro-lens array 20 is characterized by a focal $f$ and a pitch $\phi$. The pitch $\phi$ is the distance between 2 micro-lenses 21 of the micro-lens array 20.

In an embodiment, the micro-lens array 20 is located at a distance $d = f$ from the display 10. In practice this distance is very short and is typically equal to a few times the pixel size. The display 10 has a pixel size of $\delta$. Each pixel is capable of emitting a colored light or to have colored subpixels.

The light- and dark- gray cones of light represented on figure 3 illustrate how light emitted by one pixel exit the lens assembly 11 by only one half of the exit pupil 12. One beam corresponds to eye pupil 15a; the other to eye pupil 15b of a user of the head mounted device 1. To ensure that light emitted by one pixel exits strictly by one half of the exit pupil 12, the micro-lenses 21 of the micro-lens array 20 have the following characteristics: according to the Thales law, one has:

$$\frac{D}{\phi} = \frac{D+d}{2\delta}$$

Thus, one derives $\phi = 2\delta \frac{D}{D+d}$. It is worth noting that $\phi \approx 2\delta$ since $d \ll D$. Nevertheless, in this embodiment, the cylindrical pitch $\phi$ is slightly smaller than two pixels of the display 10, according to the previous equation, to ensure that the light and dark half-cones of light exit exactly by one half of the exit pupil 12.

In an embodiment, the F-number of the micro-lens array 20 $f/\phi$ and F-number the lens assembly 11 $F/\Phi$ are equal to ensure that the emitted light is not lost in the lens assembly 11. Thus, one derives that $f = \frac{F\phi}{\Phi}$.

The micro-lens array 20 is fully characterized. It is positioned on the display 10 such that the micro-lens 21 positioned at the middle of the display 10 covers equally the two central columns or rows of pixels of the display.

The display 10 mounted with the micro-lens array emits the images for the two eye pupils 15a, 15b which are interleaved. For instance, considering a display 10 with **2000 × 1000** color pixels $M(i,j)$, and two color images $I_{left,right}(i,j)$ having the same size which are dedicated to the left and right eye pupils 15a, 15b of the user of the head mounted device 1. The pixels of the displays 10 are equal to:

$$M(i,j)\begin{cases} = I_{left}(i,j) \ if \ (i \ modulo \ 2) = 0 \\ = I_{right}(i,j) \ else \end{cases}$$

Both eye pupils are observing two different images made of **1000 × 1000** pixels but with the same aspect ratio than the display 10 (2: 1). Thus, the horizontal resolution is half the vertical resolution.

With the proposed design, the two images perceived by the eyes of the user have not the same horizontal and vertical resolution. For instance, if the display 10 is made of **2000 × 1000** pixels, each eye observes a **1000 × 1000** pixel image but with an aspect ratio of **2: 1** like the one of display 10. Thus, the perceived resolution is not identical in both directions. The vertical resolution is twice larger than the horizontal resolution due to the aspect ratio.

In an embodiment, the pixels of the display 10 may be designed as rectangular. In this embodiment, the display 10 is made of **4000 × 1000** pixels with an aspect ratio of **2: 1.** In this case, the perceived resolution for the eyes is **2000 × 1000** pixels with an aspect ratio of **2: 1.** Thus, the left and right images observed by the eye, have the same resolution in both orientations.

Although the present disclosure has been described hereinabove with reference to specific embodiments, the present disclosure is not limited to the specific embodiments, and modifications will be apparent to a skilled person in the art which lie within the scope of the present disclosure.

Many further modifications and variations will suggest themselves to those versed in the art upon making reference to the foregoing illustrative embodiments, which are given by way of example only and which are not intended to limit the scope of the disclosure, that being determined solely by the appended claims. In particular the different features from different embodiments may be interchanged, where appropriate.

## Claims

1. A head-mounted device comprising:

   - a display,
   - a lens assembly,

   wherein light emitted by said display propagates through said lens assembly, said head-mounted device further comprising:

   - a micro-lens array positioned above said display,

   wherein a micro-lens of said micro-lens array covers two adjacent pixels of said display, said micro-lens enabling the light emitted by said two adjacent pixels to exit said lens-assembly respectively in a first half and in a second half of an exit pupil of said lens assembly, the light exiting the lens-assembly through the first half of said exit pupil being transmitted to a first eye pupil of a user of said head-mounted device and the light exiting the lens-assembly through the second half of said exit pupil being transmitted to a second eye pupil of said user.

2. The head-mounted device according to claim 1 wherein the micro-lenses of the micro-lens array are cylindrical.

3. The head mounted device according to claim 2 wherein a micro-lens covers two adjacent columns of pixels of said display.

4. The head mounted device according to claim 2 wherein a micro-lens covers two adjacent rows of pixels of said display.

5. The head mounted device according to one of the previous claims wherein said head mounted device comprises a reflecting wedge located in a vicinity of said exit pupil, said reflecting wedge reflecting the light exiting the lens-assembly through the first half of said exit pupil toward the first eye pupil of said user and the light exiting the lens-assembly through the second half of said exit pupil toward the second eye pupil of said user.

6. The head mounted device according to claim 5 wherein the head mounted device comprises a first and a second mirror, the first mirror reflecting the light exiting the lens-assembly through the first half of said exit pupil, and reflected by the reflecting wedge, to the first eye pupil of said user and the second mirror reflecting the light exiting the lens-assembly through the second half of said exit pupil, and reflected by the reflecting wedge, to the second eye pupil of said user.

7. The head mounted device according to claim 6 wherein the first and the second mirrors are semi-transparent mirrors.

**Fig. 1**

**Fig. 2A**

**Fig. 2B**

**Fig. 3**

Europäisches
Patentamt

European
Patent Office

Office européen
des brevets

# EUROPEAN SEARCH REPORT

**Application Number**

EP 18 30 5563

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2004/150888 A1 (DOMJAN LASZLO [HU] ET AL) 5 August 2004 (2004-08-05)<br>* abstract *<br>* paragraph [0023] - paragraph [0025] *<br>* paragraph [0029] *<br>* paragraph [0033] - paragraph [0039] *<br>* paragraph [0045] *<br>* figures 1, 4, 5 * | 1-7 | INV.<br>G02B27/22<br>G02B27/01 |
| Y | US 5 903 098 A (JONES GARY W [US])<br>11 May 1999 (1999-05-11)<br>* abstract *<br>* column 11, line 12 - line 41 *<br>* figures 9A, 9B * | 1-7 | |
| Y | US 2003/016444 A1 (BROWN DANIEL M [US] ET AL) 23 January 2003 (2003-01-23)<br>* abstract *<br>* paragraph [0071] - paragraph [0079] *<br>* figures 3-5C * | 1-7 | |
| Y | WO 96/05532 A1 (VIRTUALITY IP LTD [GB]; MARSHALL IAN [GB])<br>22 February 1996 (1996-02-22)<br>* abstract *<br>* page 8, paragraph 7 - page 12, paragraph 2 *<br>* figures 1, 4 * | 4 | TECHNICAL FIELDS SEARCHED (IPC)<br><br>G02B |

The present search report has been drawn up for all claims

| Place of search | Date of completion of the search | Examiner |
|---|---|---|
| Munich | 23 October 2018 | Schenke, Cordt |

EPO FORM 1503 03.82 (P04C01)

8

## ANNEX TO THE EUROPEAN SEARCH REPORT
## ON EUROPEAN PATENT APPLICATION NO.

EP 18 30 5563

This annex lists the patent family members relating to the patent documents cited in the above-mentioned European search report.
The members are as contained in the European Patent Office EDP file on
The European Patent Office is in no way liable for these particulars which are merely given for the purpose of information.

23-10-2018

| Patent document cited in search report | | Publication date | Patent family member(s) | | Publication date |
|---|---|---|---|---|---|
| US 2004150888 | A1 | 05-08-2004 | HU | 0203993 A2 | 30-08-2004 |
| | | | US | 2004150884 A1 | 05-08-2004 |
| | | | US | 2004150888 A1 | 05-08-2004 |
| | | | US | 2006132925 A1 | 22-06-2006 |
| | | | US | 2006245068 A1 | 02-11-2006 |
| | | | US | 2009015920 A1 | 15-01-2009 |
| | | | US | 2010290126 A1 | 18-11-2010 |
| US 5903098 | A | 11-05-1999 | US | 5903098 A | 11-05-1999 |
| | | | US | 5903243 A | 11-05-1999 |
| US 2003016444 | A1 | 23-01-2003 | AU | 2002354681 A1 | 29-01-2003 |
| | | | EP | 1412803 A2 | 28-04-2004 |
| | | | US | 2003016444 A1 | 23-01-2003 |
| | | | WO | 03007053 A2 | 23-01-2003 |
| WO 9605532 | A1 | 22-02-1996 | AU | 3187395 A | 07-03-1996 |
| | | | CA | 2197175 A1 | 22-02-1996 |
| | | | DE | 69503640 D1 | 27-08-1998 |
| | | | DE | 69503640 T2 | 25-02-1999 |
| | | | EP | 0775327 A1 | 28-05-1997 |
| | | | JP | H10504115 A | 14-04-1998 |
| | | | US | 5739955 A | 14-04-1998 |
| | | | WO | 9605532 A1 | 22-02-1996 |

EPO FORM P0459

For more details about this annex : see Official Journal of the European Patent Office, No. 12/82

**EP 3 564 735 A1**

**REFERENCES CITED IN THE DESCRIPTION**

**Patent documents cited in the description**

- US 20040004584 A